# EUROPÄISCHE PATENTSCHRIFT

(11) **EP 1 117 479 B1**
(45) Veröffentlichungstag und Bekanntmachung des Hinweises auf die Patenterteilung: **10.04.2002**
(21) Anmeldenummer: 99968641.3
(22) Anmeldetag: 25.08.1999
(51) Int. Cl.: B01J 19/00, B01J 35/00

(54) **MIKROSTRUKTUR-REAKTOR**
MICROSTRUCTURE REACTOR
REACTEUR A MICROSTRUCTURE

(30) Priorität: 04.09.1998 DE 19841993
(43) Veröffentlichungstag der Anmeldung: 25.07.2001
(73) Patentinhaber: Vodafone AG, 40213 Düsseldorf (DE)
(72) Erfinder: HERDEG, Wolfgang, 85635 Höhenkirchen (DE); REICHENBACH, Franz, 82008 Unterhaching (DE)
(74) Vertreter: Meissner, Peter E., Dipl.-Ing.
(86) Internationale Anmeldenummer: DE9902701
(87) Internationale Veröffentlichungsnummer: WO0013783

(56) Entgegenhaltungen:
- WO-A-93/06347
- WO-A-98/37457
- US-A- 5 480 622
- US-A- 5 688 474

## Beschreibung

Die Erfindung betrifft einen Mikrostruktur-Reaktor zur Durchführung endothermer chemischer Reaktionen gemäß dem Oberbegriff des Patentanspruchs 1.

Reaktoren für endotherme Prozesse in der chemischen Industrie haben in der Regel relativ große Abmessungen und demzufolge eine große Masse, die zur Durchführung der gewünschten Reaktion in aufwendiger Weise aufgeheizt werden muß. Das hat zur Folge, daß solche Reaktoren in dynamischer Hinsicht sehr träge sind und Temperaturveränderungen nur sehr langsam folgen können. Hinzu kommt der Nachteil, daß das An- und Abfahren solcher Reaktoren viel Zeit in Anspruch nimmt.

Ein weiteres Problem herkömmlicher Reaktoren, bei denen Wärme für eine endotherme Reaktion zur Verfügung gestellt werden muß, ist in dem schlechten Wärmeübergang von einem Heizmedium durch die Reaktorwand in das Prozeßmedium hinein zu sehen. Wenn die Wärme von außen in den Reaktionsprozeß hineingeführt werden muß, ist stets mit Wärmeverlusten entsprechend der Qualität des Wärmeübergangs zu rechnen. Eine Abhilfe kann in manchen Fällen dadurch geschaffen werden, daß die Wärme für die endotherme Reaktion direkt im Reaktor durch eine kontrolliert ablaufende exotherme Reaktion bereitgestellt wird. Dies kann durch eine gezielte Teilverbrennung des Prozeßmediums erreicht werden. In einem solchen Fall kann auf einen Wärmeübergang durch die Reaktorwand verzichtet werden. Die Anlage ist insoweit entsprechend dynamischer zu betreiben. Allerdings ist dies mit dem Nachteil zu erkaufen, daß die Abgase der Verbrennung sich mit den in der endothermen Reaktion gebildeten chemischen Produkten vermischen. Dadurch werden aufwendige Trenn- und Reinigungsprozesse notwendig. Zu beachten ist auch, daß die in dem Reaktor ablaufende endotherme Reaktion durch eine Verbrennung beeinträchtigt werden kann.

Zur Lösung dieser Probleme sind Vorschläge bekanntgeworden, deren wesentliches Ziel es ist, die Masse eines Reaktors drastisch zu reduzieren und dadurch dessen Dynamik erheblich zu verbessern. Solche Lösungsansätze sind in der Entwicklung sogenannter Mikroreaktoren oder Mikrostruktur-Reaktoren zu sehen. Aus der Veröffentlichung "Entwicklung von Mikrostruktur-Apparaten für Anwendungen in der chemischen und thermischen Verfahrenstechnik" (Wissenschaftliche Berichte FZKA 6080, Forschungszentrum Karlsruhe, 1998) sind Mikrostruktur-Reaktoren bekannt, die aus metallischen Werkstoffen wie Kupfer, Aluminium, Silber oder Edelstahl hergestellt werden. Derartige Apparate, die beispielsweise als Wärmeübertrager in Kreuzstrombauweise ausgeführt sind, weisen eine Vielzahl von Durchtrittskanälen für die Prozeßmedien auf, deren Querschnittsabmessungen im Submillimeterbereich liegen (z.B. 70 x 100 µm). Bei einem würfelförmigen Volumen von lediglich 3 cm Kantenlänge ist mit dem Prozeßmedium Wasser im reinen Wärmetauscherbetrieb bei einem Durchsatz von 7000 kg/h bereits eine Wärmeübertragungsleistung im Bereich von 200 kW erreicht worden. In dieser Veröffentlichung wird auch darüber berichtet, daß diese Apparate grundsätzlich auch für die Durchführung chemischer Reaktionen geeignet sind.

Aus Forschungstätigkeiten (z.B. an der Universität Stuttgart) ist der Bau von Mikrostruktur-Reaktoren bekannt, bei denen anstelle metallischer Werkstoffe Silizium eingesetzt wird. Ähnlich wie bei der Herstellung elektronischer Bauelemente aus Silizium lassen sich durch Ätzen relativ problemlos auch sehr kleine Kanäle erzeugen, die für die Durchleitung eines Prozeßmediums im Sinne eines Reaktionsraums genutzt werden können. In dieser Schrift wird von einer entsprechenden Mikro-Reaktorkammer berichtet, die eine Querschnittsfläche von 500 x 500 µm und eine Länge von ca. 20 mm aufweist. Um einen solchen Reaktor für eine endotherme katalytische Reaktion einsetzen zu können, ist vorgesehen, den Reaktionskanal jeweils mit einem Edelmetalldraht von 100 um Dicke zu versehen, der sich koaxial durch den Reaktionskanal erstreckt und als Katalysator wirkt. Die für die endotherme Reaktion erforderliche Wärme wird nicht durch ein Wärmetauschermedium in den Mikrostruktur-Reaktor eingetragen, sondern wird durch eine elektrische Widerstanderwärmung von dem eingelegten Edelmetalldraht abgegeben. Nachteilig bei dieser Lösung ist es, daß der katalytisch wirksame dünne Edelmetalldraht nur eine relativ kleine Oberfläche bietet. Außerdem kann sich die im optimalen Fall koaxiale Lage des Edelmetalldrahts im Reaktionskanal durch starke thermische Dehnung stark verändern, so daß Nachteile für den Ablauf der angestrebten chemischen Reaktion die Folge sein können.

Aus der US 5,534,328 ist ein gattungsgemäßer Mikrostruktur-Reaktor bekannt, dessen Reaktionsraum aus einer Vielzahl von Reaktionskanälen besteht, die beispielsweise in ein Siliziumsubstrat eingearbeitet sind und Querschnittsabmessungen im Submillimeterbereich aufweisen. Die Innenoberflächen der Reaktionskanäle können mit einem Katalysator beschichtet sein. Der Reaktor besteht aus einer Vielzahl miteinander verbundener Schichten des Siliziumsubstrats, von denen die meisten von Strömungskanälen für das Prozeßmedium bzw. das im Reaktor erzeugte Produkt durchzogen sind. Zur Beheizung einer im Reaktor durchzuführenden endothermen Reaktion ist eine elektrische Widerstandsheizung vorgesehen, die in Form eines mäanderförmig verlegten elektrischen Leiters ausgebildet ist, der in entsprechende Vertiefungen im Oberflächenbereich zweier unmittelbar aufeinander liegender Schichten eingelegt ist. Dies ist einerseits für die Dynamik des Reaktors nachteilig, da die erzeugte Wärme zunächst durch die entsprechende Schicht des Siliziumsubstrats hindurchfließen muß, bevor sie an das Prozeßmedium gelangt. Andererseits bedarf es eines zusätzlichen Aufwandes zur Herstellung der Vertiefungen für die Verlegung des elektrischen Leiters, wodurch die Herstellkosten für den Reaktor erhöht werden.

Aufgabe der vorliegenden Erfindung ist es, einen elektrisch beheizbaren Mikrostruktur-Reaktor dahingehend zu verbessern, daß in den Reaktionskanälen eine möglichst große Katalysatorfläche zur Verfügung steht und negative Einflüsse durch eine Verlagerung des Katalysatormaterials relativ zur Längsachse der Reaktionskanäle vermieden werden. Der erforderliche bauliche Aufwand für die elektrische Widerstandsheizung soll möglichst klein gehalten und eine besonders hohe Dynamik des Reaktors sichergestellt werden.

Gelöst wird diese Aufgabe bei einem gattungsgemäßen Mikrostruktur-Reaktor nach einem ersten Aspekt der Erfindung dadurch, daß der Katalysator nicht in Form eines metallischen Drahtes in den Reaktionskanälen angeordnet wird, sondern in gleichmäßiger Schichtdicke auf der Innenoberfläche der Reaktionskanäle aufgebracht wird und direkt durch Widerstandserwärmung beheizbar ist. Die elektrische Beheizung des aus Silizium gebildeten Mikrostruktur-Reaktors wird also im Prinzip beibehalten, so daß für die Durchführung der endothermen Reaktion kein Wärmeaustausch durch die Reaktorwand erfolgen muß. Da es keinen zentralen Katalysatordraht in den Reaktionskanälen gibt, existiert auch das damit verbundene Problem einer Verlagerung aus dem Zentrum des Reaktionskanals infolge thermischer Dehnung nicht mehr. Gleichzeitig ist dies mit dem großen Vorteil verbunden, daß die wirksame Oberfläche des Katalysators um ein Vielfaches größer ist als bei der bekannten Lösung mit dem Katalysatordraht, da erfindungsgemäß die gesamte Innenoberfläche des Reaktionskanals jeweils mit dem Katalysator beschichtet ist. Gegenüber dem Reaktor gemäß US 5 534 328 ist weder ein Aufwand für die Einarbeitung von Vertiefungen für die elektrische Widerstandsheizung erforderlich, noch muß die erzeugte Wärme zunächst noch durch die Wandung des Siliziumsubstrats fließen, um zum Prozeßmedium zu gelangen. Dadurch ergibt sich ein Reaktor mit besonders hoher Dynamik.

Wesentlich für die Wirksamkeit und Zuverlässigkeit des erfindungsgemäßen Reaktors ist es, daß der Katalysator in einer gleichmäßigen Schichtdicke aufgebracht ist. Eine ungleichmäßige Schichtdicke ruft wegen der örtlich dadurch hervorgerufenen Unterschiede im elektrischen Widerstand entsprechend unterschiedliche Oberflächentemperaturen im Katalysator hervor. Eine zu dicke Beschichtung führt zu einer entsprechend niedrigeren Temperatur, während eine zu dünne Beschichtung zu hohe Temperatur hervorrufen kann, die u.U. sogar zu einer unzulässigen Versinterung des Katalysators führt. Fehlt an einer Stelle die Katalysatorbeschichtung völlig, so fehlt auch dort die elektrische Beheizung. Gleichzeitig wird sich jedoch im beschichteten Teil an der in Umfangsrichtung gleichen Stelle über die Kanallänge betrachtet eine entsprechend höhere Temperatur einstellen.

Nach einem zweiten Aspekt der Erfindung ist für einen gattungsgemäßen Reaktor vorgesehen, den elektrisch leitenden Katalysator auf einem unmittelbar auf der Innenoberfläche der Reaktionskanäle anhaftenden, ebenfalls elektrisch leitenden Trägermaterial aufzubringen, wobei der Katalysator und das Trägermaterial in der Summe eine gleichmäßige Schichtdicke auf der Innenoberfläche der Reaktionskanäle aufweisen und die Gesamtschicht aus Katalysator und Trägermaterial unmittelbar selbst durch Widerstandserwärmung beheizbar ist. Dadurch ergeben sich die gleichen Effekte, wie sie bereits vorstehend zum ersten Aspekt der Erfindung beschrieben sind.

Gemäß einem dritten Aspekt der Erfindung wird eine weitere Lösungsvariante bereitgestellt, die für elektrisch nichtleitende Katalysatomaterialien in Frage kommt. Wie bereits gemäß dem zweiten Aspekt der Erfindung ist auch hierbei vorgesehen, daß der Katalysator auf einem elektrisch leitfähigen Material aufgebracht ist, das als Zwischenschicht unmittelbar auf der Innenoberfläche der Reaktionskanäle haftet. Diese Zwischenschicht ist durch Widerstandserwärmung unmittelbar beheizbar. Zur Vermeidung von Temperaturunterschieden muß die Dicke der Zwischenschicht gleichmäßig sein. Da die Katalysatorschicht, die sehr dünn ist, unmittelbar auf dem elektrischen Leiter für die Widerstandserwärmung haftet, erfolgt die Erwärmung des Katalysators in Abhängigkeit vom elektrischen Strom ähnlich schnell wie bei den beiden anderen Lösungsvarianten der Erfindung. Die Wärme muß also nicht durch die Wand des Siliziumsubstrats hindurchströmen, sondern kann somit praktisch direkt auf das jeweilige Prozeßmedium übergehen.

Vorteilhafte Weiterbildungen der Varianten der vorliegenden Erfindung ergeben sich aus den abhängigen Unteransprüchen.

Zweckmäßigerweise wird der Katalysator auf einem Trägermaterial aufgebracht, das als Zwischenschicht unmittelbar auf der Innenoberfläche der Reaktionskanäle haftet. Eine solche Zwischenschicht besteht vorzugsweise aus Al₂O₃ oder SiO₂ oder Mischungen dieser beiden Verbindungen, die vielfach als Katalysatorträger in chemischen Apparaten eingesetzt werden und elektrische Isolatoren darstellen.

Es ist aber auch möglich und im Hinblick auf die Durchleitung des elektrischen Heizstroms vielfach vorteilhaft, gemäß dem zweiten und dritten Aspekt der Erfindung ein elektrisch leitendes Trägermaterial zu verwenden. Damit eine möglichst gleichmäßige Temperaturverteilung erreicht wird, kommt es darauf an, dieses Trägermaterial ähnlich wie das Material des Katalysators in einer gleichmäßigen Schichtdicke aufzubringen. Im Hinblick auf die Widerstandserwärmung ist klar, daß Schwankungen in der Schichtdicke eines elektrischen leitenden Katalysators durch entsprechend umgekehrte Schwankungen der Schichtdicke des Trägermaterials praktisch ausgeglichen werden können. Insofern kommt es in erster Linie darauf an, daß die Summe der beiden Schichtdicken an einer beliebigen Stelle jeweils möglichst genau so groß ist, wie an den anderen Stellen. Dabei sollte aber gewährleistet sein, daß sich die Schicht des Katalysators möglichst lückenlos über die gesamte Innenoberfläche der Reaktionskanäle erstreckt, um eine optimale Wirkung zu entfalten.

Zur Einleitung des elektrischen Stroms für die Beheizung des Reaktors sind elektrische Kontakte vorgesehen, die mit der Schicht des Katalysators und/oder mit einer elektrisch leitenden Zwischenschicht verbunden sind. Um den Durchschrittsquerschnitt der Reaktionskanäle, deren Querschnittsabmessungen im Submillimeterbereich liegen, möglichst nicht zu beeinträchtigen, empfiehlt es sich, die Schicht des Katalysators und/oder die Schicht des elektrisch leitenden Trägermaterials aus den Reaktionskanälen heraus nach außen fortzuführen und die elektrischen Kontakte außerhalb des eigentlichen Reaktionskanals anzubringen.

Beispielsweise für die Herstellung von Wasserstoff durch Dampfreformierung von Kohlenwasserstoffen kommen als Katalysator insbesondere die Metalle der Gruppe VIII des Periodensystems und deren Legierungen untereinander in Frage. Besonders bevorzugt sind die Metalle Nickel und Platin sowie deren Legierungen.

Durch den Einbau von Mikroventilen in die Reaktionskanäle oder zumindest einen Teil der Reaktionskanäle ergibt sich die Möglichkeit, den Durchfluß des Prozeßmediums, das vorzugsweise aus Gasen und/oder Dämpfen besteht, zu steuern und zu regeln. Über eine Beeinflussung der Medienströmung ergibt sich somit ein Weg, die Reaktion und dadurch indirekt auch die Temperatur im Reaktor zu steuern. Diese läßt sich selbstverständlich auch durch eine entsprechende Regelung des elektrischen Stroms zur Widerstandserwärmung der Katalysatorschicht und/oder einer elektrisch leitenden Zwischenschicht beeinflussen.

Für die Wirksamkeit des erfindungsgemäßen Reaktors ist ein weiterer Aspekt von Bedeutung, der ebenfalls auf eine Beeinflussung der Strömung des Prozeßmediums abzielt. Durch die Erzeugung von Mikrostrukturen auf der Innenoberfläche der Reaktionskanäle läßt sich nämlich im durchströmenden Medium eine turbulente Strömung gewährleisten. Die hierdurch bewirkte ständige Durchmischung des Prozeßmediums hat zur Folge, daß die angestrebte chemische Reaktion weitestgehend vollständig abläuft, so daß ein sehr hoher Umwandlungsgrad für die als Prozeßmedium eingesetzten Stoffe erreichbar ist.

Zweckmäßigerweise werden die Reaktionskanäle des Mikrostruktur-Reaktors jeweils parallel zueinander in kleinen Platten eines Siliziumssubstrats in bekannter Weise durch Ätzen eingearbeitet. Es empfiehlt sich dabei, die im unmontierten Zustand nach oben offenen Reaktionskanäle sowohl auf der Ober- als auch auf der Unterseite einer solchen Platte aus Silizium anzubringen. Um bei einer geringen Plattendicke eine möglichst dichte Packung der Reaktionskanäle zu ermöglichen, sollten die Reaktionskanäle jeweils alternierend so angeordnet werden, daß die unmittelbar benachbarten Reaktionskanäle eines Reaktionskanals jeweils mit ihrer offenen Seite jeweils zur anderen Seite des Siliziumsubstrats weisen. Ein Mikrostruktur-Reaktor läßt sich dann ohne weiteres aus einer Vielzahl übereinander gestapelter Platten erzeugen, die in dieser Weise bearbeitet sind, wobei die nach oben bzw. unten offenen Reaktionskanäle jeweils durch den "Boden" der darüberliegenden Platte bzw. die "Deckfläche" der darunterliegenden Platte in Längsrichtung geschlossen werden und damit jeweils nur an den Stirnseiten eine Eintritts- bzw. Austrittsöffnung für das Prozeßmedium bzw. die Reaktionsprodukte aufweisen.

Für das Aufbringen einer Zwischenschicht und der Schicht des Katalysators lassen sich grundsätzlich die üblichen Verfahren der Katalysatorherstellung einsetzen. Eine elektrisch leitende Zwischenschicht kann durch Aufdampfen von Metallen und/oder durch galvanische Verfahren aufgetragen werden. Soll die Zwischenschicht aus Aluminiumoxid bestehen, wird zweckmäßig das PVD-Verfahren angewandt. Soll die Zwischenschicht aus Metall bestehen, wird vorzugsweise galvanisch beschichtet.

Nachfolgend wird die Erfindung anhand der in der Zeichnung dargestellten Ausführungsbeispiele näher erläutert. Es zeigen:
- Fig. 1: einen schematischen Längsschnitt durch den Reaktionskanal eines erfindungsgemäßen Reaktors und
- Fig. 2: eine schematische Ansicht eines plattenförmigen Siliziumsubstrats mit wechselseitig eingearbeiteten Reaktionskanälen.

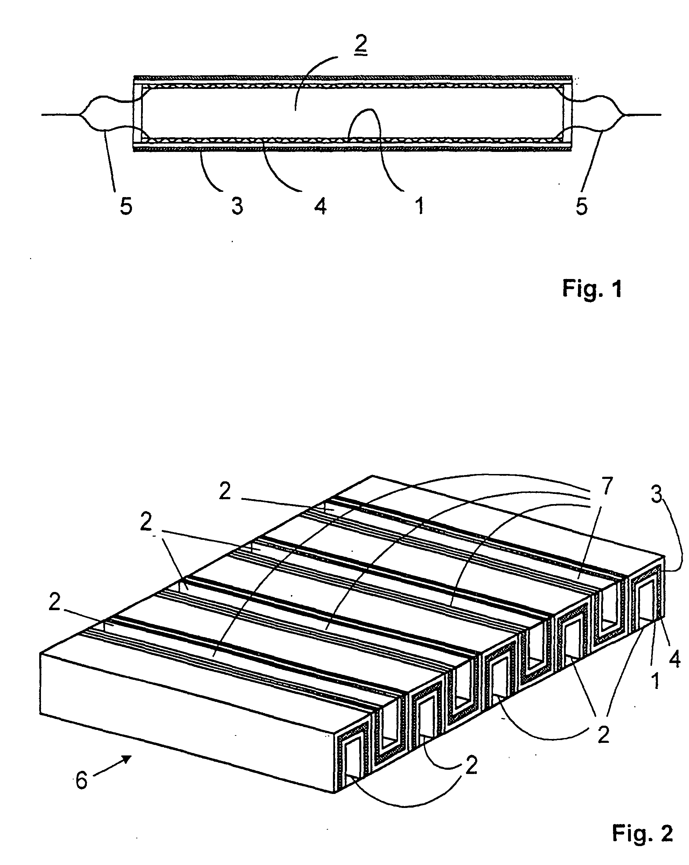

Der in Fig. 1 dargestellte schematische Längsschnitt durch den Strömungskanal 2 eines erfindungsgemäßen Mikrostruktur-Reaktors läßt die verschiedenen Schichten der Reaktorwand erkennen. Als erstes ist die Schicht eines Siliziumsubstrats 3 zu nennen, auf die der Katalysator 1 aufgebracht ist. Der Katalysator 1 haftet jedoch nicht unmittelbar auf der Innenoberfläche des Siliziumsubstrats 3, sondern auf einem Trägermaterial 4, das beispielsweise aus Al₂O₃ gebildet ist und somit einen elektrischen Isolator darstellt. Der Katalysator 1 ist in gleichmäßiger Schichtdicke über die Innenoberfläche des Reaktionskanals 2 verteilt. Zur Einleitung eines elektrischen Stroms für die Beheizung des endothermen Reaktors sind elektrische Kontakte 5 vorgesehen, die unmittelbar mit der Schicht des Katalysators 1 verbunden sind. Im Falle einer Verwendung eines elektrisch leitfähigen Materials für das Trägermaterial 4 des Katalysators 1 könnten die elektrischen Kontakte 5 auch unmittelbar mit dem Trägermaterial 4 verbunden werden. Wenn die Schicht des Katalysators 1 und/oder die Schicht eines elektrisch leitenden Trägermaterials 4 über die Stirnseiten des Reaktionskanals 2 nach außen geführt sind, können die Kontakte 5 außerhalb des Durchtrittsquerschnitts des Reaktionskanals 2 angebracht werden und beeinträchtigen damit nicht die freie Durchtrittsfläche für das Prozeßmedium. Durch die Dicke der Schicht des Katalysators 1 und/oder einer elektrisch leitenden Zwischenschicht des Trägermaterials 4 für den Katalysator 1 ergibt sich eine Einflußgröße für die Einstellung der Temperatur auf der Innenoberfläche des erfindungsgemäßen Reaktors. Je dicker diese Schicht bzw. Schichten sind, um so geringer ist der elektrische Widerstand und damit bei gegebener elektrischer Spannung die sich einstellende Temperatur.

In Fig. 2 ist eine Vielzahl von parallel nebeneinander angeordneten Reaktionskanälen 2 dargestellt, die jeweils in eine Platte 6 eines Siliziumsubstrats mit den bekannten präzisen Fertigungsverfahren der Siliziumtechnologie erzeugt worden sind. Die Strömungskanäle 2, die jeweils an einer Längsseite eine offene Seite 7 aufweisen, sind parallel und alternierend in der Weise zueinander angeordnet, daß die offene Seite 7 eines Reaktionskanals 2 jeweils zu einer anderen Seite weist als die beiden unmittelbar benachbarten Reaktionskanäle 2. Auf diese Weise sind die Reaktionskanäle 2 sehr dicht aneinandergepackt. Wenn man eine Vielzahl derartiger Platten 6 übereinanderstapelt und auf diese Weise einen erfindungsgemäßen Mikrostruktur-Reaktor erzeugt, dann werden die offenen Seiten 7 der Strömungskanäle 2 jeweils durch einen entsprechenden Boden der darüberliegenden bzw. darunterliegenden Platte 6 abgedeckt, so daß sich eine Vielzahl von in Längsrichtung allseitig geschlossenen Reaktionskanälen 2 ergibt. Lediglich die beiden Stirnseiten sind für den Eintritt des Prozeßmediums bzw. für den Austritt der Reaktionsprodukte offen. Ein solcher Plattenstapel kann beispielsweise in ein metallisches Gehäuse gepackt werden, das mit den erforderlichen Zu- und Ableitungen für die Medienführung versehen ist. Die Querschnittsabmessungen der Strömungskanäle liegen im Submillimeterbereich, ihre Länge vorzugsweise im Zentimeterbereich. Durch Parallelschaltung einer Vielzahl derartiger Mikrostruktur-Reaktoren lassen sich beliebige größere Gesamtreaktor-Strukturen für größere Durchsatzleistungen erzeugen. Bemerkenswert ist, daß der erfindungsgemäße Reaktor bezogen auf seine Größe und sein Gewicht außerordentlich hohe Durchsatzleistungen gewährleistet, zumal die katalytisch wirksame Oberfläche bezogen auf das Reaktorvolumen sehr groß ist. Ein solcher Reaktor eignet sich in besonderer Weise für mobile Anwendungen, wie etwa zur Erzeugung von Wasserstoff für Brennstoffzellen in einem Fahrzeug.

Besonders gute Ergebnisse lassen sich erzielen, wenn die Innenoberfläche der Reaktionskanäle 2 mit Mikrostrukturen versehen sind, die zu einer turbulenten Strömung im Medienstrom führen.

Im Hinblick auf den Betrieb eines erfindungsgemäßen Mikrostruktur-Reaktors sind mehrere Möglichkeiten gegeben. Zweckmäßigerweise wird man im Regelfall die gesamte Energie, die zur Durchführung der endothermen Reaktion des eingesetzten Prozeßmediums erforderlich ist, durch die elektrische Widerstandsbeheizung einbringen. In manchen Fällen kann es jedoch auch vorteilhaft sein, lediglich einen Teil dieser Energie auf elektrischem Wege zu erzeugen und im übrigen die erforderliche Wärme durch beispielsweise eine partielle Oxidation des Prozeßmediums bereitzustellen. Wenn letzteres zweckmäßig ist, dann kann die elektrische Beheizung auch lediglich auf eine Anfangsphase zur Anheizung und zur Initiierung der partiellen Oxidation beschränkt werden. Eine partielle Oxidation läßt sich ohne weiteres kontrolliert durchführen, indem beispielsweise einem Strom von Kohlenwasserstoffen, aus denen Wasserstoff erzeugt werden soll, eine dosierte Menge an Sauerstoff zugegeben wird, die nur einen Teil des Prozeßmediums oxidieren kann und somit eine berechenbare Menge an Wärmeenergie freisetzt.

## Patentansprüche

1. Durch Widerstandserwärmung elektrisch beheizbarer Mikrostruktur-Reaktor zur Durchführung endothermer chemischer Reaktionen unter Anwesenheit eines auf der Innenoberfläche der Reaktionskanäle (2) aufgebrachten Katalysators (1), wobei der Reaktionsraum des Reaktors aus einer Vielzahl von Reaktionskanälen (2) besteht, die in ein Siliziumsubstrat (3) eingearbeitet sind und Querschnittsabmessungen im Submillimeterbereich aufweisen,
**dadurch gekennzeichnet,**
**daß** der elektrisch leitende Katalysator (1) in gleichmäßiger Schichtdicke aufgebracht ist und unmittelbar selbst durch die Widerstandserwärmung beheizbar ist, daß die Reaktionskanäle (2) parallel zueinander jeweils in eine Platte (6) des Siliziumsubstrats (3) eingearbeitet sind, daß die unmittelbar benachbarten Reaktionskanäle (2) jeweils alternierend zur Ober- oder Unterseite der Platte (6) offen sind und daß der Reaktor aus einer Vielzahl übereinander gestapelter Platten (6) des Siliziumsubstrats (3) besteht, wobei die Längsöffnungen (7) der Reaktionskanäle (2) jeweils durch die darüberliegende oder darunterliegende Platte (6) abgedeckt werden.

2. Durch Widerstandserwärmung elektrisch beheizbarer Mikrostruktur-Reaktor zur Durchführung endothermer chemischer Reaktionen unter Anwesenheit eines auf der Innenoberfläche der Reaktionskanäle (2) aufgebrachten Katalysators (1), wobei der Reaktionsraum des Reaktors aus einer Vielzahl von Reaktionskanälen (2) besteht, die in ein Siliziumsubstrat (3) eingearbeitet sind und Querschnittsabmessungen im Submillimeterbereich aufweisen,
**dadurch gekennzeichnet,**
**daß** der elektrisch leitende Katalysator (1) auf einem unmittelbar auf der Innenoberfläche der Reaktionskanäle (2) haftenden, elektrisch leitenden Trägermaterial (4) aufgebracht ist, wobei der Katalysator (1) und das Trägermaterial (4) in der Summe eine gleichmäßige Schichtdicke aufweisen und die Gesamtschicht aus Katalysator und Trägermaterial unmittelbar selbst durch die Widerstandserwärmung beheizbar ist, daß die Reaktionskanäle (2) parallel zueinander jeweils in eine Platte (6) des Siliziumsubstrats (3) eingearbeitet sind, daß die unmittelbar benachbarten Reaktionskanäle (2) jeweils alternierend zur Ober- oder Unterseite der Platte (6) offen sind und daß der Reaktor aus einer Vielzahl übereinander gestapelter Platten (6) des Siliziumsubstrats (3) besteht, wobei die Längsöffnungen (7) der Reaktionskanäle (2) jeweils durch die darüberliegende oder darunterliegende Platte (6) abgedeckt werden.

3. Durch Widerstandserwärmung elektrisch beheizbarer Mikrostruktur-Reaktor zur Durchführung endothermer chemischer Reaktionen unter Anwesenheit eines auf der Innenoberfläche der Reaktionskanäle (2) aufgebrachten Katalysators (1), wobei der Reaktionsraum des Reaktors aus einer Vielzahl von Reaktionskanälen (2) besteht, die in ein Siliziumsubstrat (3) eingearbeitet sind und Querschnittsabmessungen im Submillimeterbereich aufweisen,
**dadurch gekennzeichnet,**
**daß** der elektrisch nichtleitende Katalysator (1) auf einem in gleichmäßiger Schichtdicke aufgebrachten elektrisch leitenden Trägermaterial (4) aufgebracht ist, das als Zwischenschicht unmittelbar auf der Innenoberfläche der Reaktionskanäle (2) haftet und unmittelbar selbst durch die Widerstandserwärmung beheizbar ist, daß die Reaktionskanäle (2) parallel zueinander jeweils in eine Platte (6) des Siliziumsubstrats (3) eingearbeitet sind, daß die unmittelbar benachbarten Reaktionskanäle (2) jeweils alternierend zur Ober- oder Unterseite der Platte (6) offen sind und daß der Reaktor aus einer Vielzahl übereinander gestapelter Platten (6) des Siliziumsubstrats (3) besteht, wobei die Längsöffnungen (7) der Reaktionskanäle (2) jeweils durch die darüberliegende oder darunterliegende Platte (6) abgedeckt werden.

4. Reaktor nach Anspruch 1,
**dadurch gekennzeichnet,**
**daß** der Katalysator (1) auf einem Trägermaterial (4) aufgebracht ist, das als Zwischenschicht unmittelbar auf der Innenoberfläche der Reaktionskanäle (2) haftet.

5. Reaktor nach Anspruch 4,
**dadurch gekennzeichnet,**
**daß** das Trägermaterial (4) ein elektrischer Isolator, insbesondere AL₂O₃ und/oder SiO₂, ist.

6. Reaktor nach einem der Ansprüche 1 bis 4,
**dadurch gekennzeichnet,**
**daß** die Schicht des Katalysators (1) und/oder die Schicht des elektrisch leitenden Trägermaterials (4) aus den Reaktionskanälen (2) heraus nach außen fortgeführt ist und daß die elektrischen Kontakte (5) zur Einleitung des Heizstroms außerhalb der Reaktionskanäle (2) angebracht sind.

7. Reaktor nach einem der Ansprüche 1 bis 6,
**dadurch gekennzeichnet,**
**daß** der Katalysator (1) aus Platin und/oder Nickel besteht.

8. Reaktor nach einem der Ansprüche 1 bis 7,
**dadurch gekennzeichnet,**
**daß** zur Steuerung der durch den Reaktor fließenden Medien zumindest ein Teil der Reaktionskanäle (2) mit Mikroventilen versehen ist.

9. Reaktor nach einem der Ansprüche 1 bis 8,
**dadurch gekennzeichnet,**
**daß** die Innenoberflächen der Reaktionskanäle (2) zur Erzeugung einer turbulenten Strömung mit Mikrostrukturen versehen sind.

## Claims

1. Microstructure reactor, electrically heatable by resistance heating, for carrying out endothermic chemical reactions in the presence of a catalyst (1) applied to the inner surface of the reaction channels (2), where the reaction chamber of the reactor comprises a number of reaction channels (2), which are incorporated into a silicon substrate (3) and which have cross-sectional dimensions in the sub-millimetre range,
**characterised by** the fact
that the electrically-conducting catalyst (1) is applied in a layer of even thickness and is itself directly heatable by the resistance heating; that the reaction channels (2) are incorporated, parallel to one another, in a plate (6) of the silicon substrate (3); that the reaction channels (2) which are immediately adjacent to each other are each open to the top or bottom of the plate (6) alternately; and that the reactor consists of a number of plates (6) stacked on top of each other, the lengthwise open sections (7) of the reaction channels (2) being covered in each case by the plate (6) which is on top of or underneath them.

2. Microstructure reactor, electrically heatable by resistance heating, for carrying out endothermic chemical reactions in the presence of a catalyst (1) applied to the inner surface of the reaction channels (2), where the reaction chamber of the reactor comprises a number of reaction channels (2), which are incorporated into a silicon substrate (3) and which have cross-sectional dimensions in the sub-millimetre range,
**characterised by** the fact
that the electrically conducting catalyst (1) is applied to an electrically conducting supporting material (4) which adheres directly to the inner surface of the reaction channels (2), where the catalyst (1) and the supporting material (4) in total have a uniform layer thickness, and where the entire layer - catalyst and supporting material - can itself be directly heated by resistance heating; that the reaction channels (2) are incorporated, parallel to one another, in a plate (6) of the silicon substrate (3); that the reaction channels (2) which are immediately adjacent to each other are each open to the top or bottom of the plate (6) alternately; and that the reactor consists of a number of plates (6) stacked on top of each other, the lengthwise open sections (7) of the reaction channels (2) being covered in each case by the plate (6) which is on top of or underneath them.

3. Microstructure reactor, electrically heatable by resistance heating, for carrying out endothermic chemical reactions in the presence of a catalyst (1) applied to the inner surface of the reaction channels (2), where the reaction chamber of the reactor comprises a number of reaction channels (2), which are incorporated into a silicon substrate (3) and which have cross-sectional dimensions in the sub-millimetre range,
**characterised by** the fact
that the electrically non-conducting catalyst (1) is applied on an electrically conducting supporting material (4) which is applied in a layer of even thickness, and which adheres, as an intermediate layer, directly to the inner surface of the reaction channels (2), and which can itself be directly heated by resistance heating; that the reaction channels (2) are incorporated, parallel to one another, in a plate (6) of the silicon substrate (3); that the reaction channels (2) which are immediately adjacent to each other are each open to the top or bottom of the plate (6) alternately; and that the reactor consists of a number of plates (6) stacked on top of each other, the lengthwise open sections (7) of the reaction channels (2) being covered in each case by the plate (6) which is on top of or underneath them.

4. Reactor as in Claim 1,
**characterised by** the fact that
the catalyst (1) is applied on a supporting material (4) which adheres, as an intermediate layer, directly to the inner surface of the reaction channels (2).

5. Reactor as in Claim 4,
**characterised by** the fact
that the supporting material (4) is an electrical insulator, particularly Al₂O₃ and/or SiO₂.

6. Reactor as in one of Claims 1 to 4,
**characterised by** the fact
that the layer of the catalyst (1) and/or the layer of the electrically conducting supporting material (4) is continued outwards from the reaction channels (2), and that the electrical contacts (5) for the introduction of the heating current are applied outside the reaction channels (2).

7. Reactor as in one of Claims 1 to 6,
**characterised by** the fact
that the catalyst (1) is made of platinum and/or nickel.

8. Reactor as in one of Claims 1 to 7,
**characterised by** the fact
that at least part of the reaction channels (2) is fitted with microvalves in order to control the media which flow through the reactor.

9. Reactor as in one of Claims 1 to 8,
**characterised by** the fact
that the inner surfaces of the reaction channels (2) have microstructures to create a turbulent flow.

## Revendications

1. Réacteur à microstructures pouvant être chauffé électriquement par chauffage par résistance pour effectuer des réactions chimiques endothermiques en présence d'un catalyseur (1) appliqué sur la surface interne des canaux de réaction (2), l'espace de réaction du réacteur étant constitué d'une pluralité de canaux de réaction (2) qui sont usinés dans un substrat de silicium (3) et présentent des dimensions en section transversale dans la plage sous-millimétrique,
**caractérisé en ce que** le catalyseur électriquement conducteur (1) est appliqué à une épaisseur de couche uniforme et peut être chauffé directement lui-même par le chauffage par résistance, **en ce que** les canaux de réaction (2) sont usinés parallèlement les uns aux autres, à chaque fois, dans une plaque (6) du substrat de silicium (3), **en ce que** les canaux de réaction (2) directement voisins sont ouverts, à chaque fois, de façon alternée vers le dessus ou le dessous de la plaque (6), et **en ce que** le réacteur est constitué d'une pluralité de plaques (6) du substrat de silicium (3) empilées l'une au-dessus de l'autre, les ouvertures longitudinales (7) des canaux de réaction (2) étant à chaque fois recouvertes par la plaque sus-jacente ou sous-jacente (6).

2. Réacteur à microstructures pouvant être chauffé électriquement par chauffage par résistance pour effectuer des réactions chimiques endothermiques en présence d'un catalyseur (1) appliqué sur la surface interne des canaux de réaction (2), l'espace de réaction du réacteur étant constitué d'une pluralité de canaux de réaction (2) qui sont usinés dans un substrat de silicium (3) et présentent des dimensions en section transversale dans la plage sous-millimétrique,
**caractérisé en ce que** le catalyseur électriquement conducteur (1) est appliqué sur une matière de support électriquement conductrice (4) adhérant directement sur la surface interne des canaux de réaction (2), le catalyseur (1) et la matière de support (4) présentant, en considérant leur somme, une épaisseur de couche uniforme et la couche totale du catalyseur et de la matière de support pouvant être chauffée directement elle-même par le chauffage par résistance, **en ce que** les canaux de réaction (2) sont usinés parallèlement les uns aux autres, à chaque fois, dans une plaque (6) du substrat de silicium (3), **en ce que** les canaux de réaction (2) directement voisins sont ouverts, à chaque fois, de façon alternée vers le dessus ou le dessous de la plaque (6), et **en ce que** le réacteur est constitué d'une pluralité de plaques (6) du substrat de silicium (3) empilées l'une au-dessus de l'autre, les ouvertures longitudinales (7) des canaux de réaction (2) étant à chaque fois recouvertes par la plaque sus-jacente ou sous-jacente (6).

3. Réacteur à microstructures pouvant être chauffé électriquement par chauffage par résistance pour effectuer des réactions chimiques endothermiques en présence d'un catalyseur (1) appliqué sur la surface interne des canaux de réaction (2), l'espace de réaction du réacteur étant constitué d'une pluralité de canaux de réaction (2) qui sont usinés dans un substrat de silicium (3) et présentent des dimensions en section transversale dans la plage sous-millimétrique,
caractérisé en ce le catalyseur électriquement non conducteur (1) est appliqué sur une matière de support (4) électriquement conductrice, appliquée en une épaisseur de couche uniforme, qui adhère, comme couche intermédiaire, directement sur la surface interne des canaux de réaction (2) et peut être chauffée directement elle-même par le chauffage par résistance, en ce que les canaux de réaction (2) sont usinés parallèlement les uns aux autres, à chaque fois, dans une plaque (6) du substrat de silicium (3), en ce que les canaux de réaction (2) directement voisins sont ouverts, à chaque fois, de façon alternée vers le dessus ou le dessous de la plaque (6), et en ce que le réacteur est constitué d'une pluralité de plaques (6) du substrat de silicium (3), empilées l'une sur l'autre, les ouvertures longitudinales (7) des canaux de réaction (2) étant à chaque fois recouvertes par la plaque sus-jacente ou sous-jacente (6).

4. Réacteur selon la revendication 1,
**caractérisé en ce que** le catalyseur (1) est appliqué sur une matière de support (4) qui adhère comme couche intermédiaire directement sur la surface interne des canaux de réaction (2).

5. Réacteur selon la revendication 4,
**caractérisé en ce que** la matière de support (4) est un isolateur électrique, en particulier Al₂O₃ et/ou SiO₂.

6. Réacteur selon une des revendications 1 à 4,
**caractérisé en ce que** la couche du catalyseur (1) et/ou la couche de la matière de support électriquement conductrice (4) se poursuit vers l'extérieur hors des canaux de réaction (2), et **en ce que** les contacts électriques (5) pour introduire le courant de chauffage sont agencés à l'extérieur des canaux de réaction (2).

7. Réacteur selon une des revendications 1 à 6,
**caractérisé en ce que** le catalyseur (1) est constitué de platine et/ou de nickel.

8. Réacteur selon une des revendications 1 à 7,
**caractérisé en ce que**, pour commander les fluides circulant à travers le réacteur, au moins une partie des canaux de réaction (2) est munie de microvalves.

9. Réacteur selon une des revendications 1 à 8,
**caractérisé en ce que** les surfaces internes des canaux de réaction (2) sont munies de microstructures pour engendrer un écoulement turbulent.
